(19) Europäisches Patentamt / European Patent Office / Office européen des brevets

(11) **EP 2 851 707 B1**

(12) **FASCICULE DE BREVET EUROPEEN**

(45) Date de publication et mention de la délivrance du brevet:
**07.06.2017   Bulletin 2017/23**

(51) Int Cl.:
**G01S 19/30** *(2010.01)*        **G01S 19/22** *(2010.01)*

(21) Numéro de dépôt: **14185120.4**

(22) Date de dépôt: **17.09.2014**

(54) **Procédé d'acquisition d'un signal de radionavigation par satellite et récepteur de radionavigation par satellite mettant en oeuvre ce procédé**

Verfahren zur Akquirierung eines Satellitenradionavigationssignals und Satellitenradionavigationsempfänger zur Durchführung des Verfahrens

Method of satellite radio navigation signal acquisition and satellite radio navigation receiver implementing the method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2013   FR 1302219**

(43) Date de publication de la demande:
**25.03.2015   Bulletin 2015/13**

(73) Titulaire: **Thales**
**92200 Neuilly Sur Seine (FR)**

(72) Inventeurs:
• **Fouilland, Bernard**
  **26027 Valence (FR)**
• **Vieux, Patrick**
  **26027 Valence (FR)**

(74) Mandataire: **Lavoix**
**2, place d'Estienne d'Orves**
**75441 Paris Cedex 09 (FR)**

(56) Documents cités:
**DE-A1-102006 001 794      FR-A1- 2 739 695**
**FR-A1- 2 974 914      FR-A1- 2 984 524**
**US-A1- 2006 215 739**

• **Danai Skournetou; Lohan Elena Simona: "Non-coherent multiple correlator delay structures and their tracking performance for Galileo signals", , 1 mai 2007 (2007-05-01), XP055119272, Extrait de l'Internet: URL:http://citeseerx.ist.psu.edu/viewdoc/d ownload?doi=10.1.1.77.2140&rep=rep1&type=p df [extrait le 2014-05-21]**

## Description

La présente invention concerne le domaine de la réception des signaux de radionavigation par satellite.

Un système de navigation par satellite permet à un utilisateur de déterminer sa position géographique en trois dimensions (longitude, latitude et altitude), sa vitesse et le temps. Des systèmes de navigation par satellite sont connus sous les noms GPS, GALILEO ou GLONASS.

Un tel système de navigation par satellite comprend une constellation de satellites en orbite. Chaque satellite émet un signal satellite composé d'une porteuse de fréquence déterminée, modulée par un message de navigation et un code d'identification, dit « code pseudo-aléatoire ». Le message de navigation contient notamment des données sur l'éphéméride du satellite. Le code pseudo-aléatoire est un signal binaire cyclique pseudo-aléatoire spécifique au satellite. Chaque satellite à son propre code pseudo-aléatoire et sa propre fréquence de porteuse. Le code pseudo-aléatoire étale le signal satellite sur une bande de fréquence large et noie le signal satellite dans le bruit de fond. Ceci limite les interférences entre les signaux satellite et la sensibilité aux perturbations externes.

Pour détecter un signal satellite, le récepteur génère un code local à l'aide d'un générateur de code piloté par un oscillateur à commande numérique, le code local reproduisant le code pseudo-aléatoire du signal satellite, et corrèle le signal reçu avec le code local.

Dans une phase initiale d'acquisition dans laquelle le récepteur essaye de détecter le signal satellite, il est nécessaire de synchroniser le code local généré localement avec le code pseudo-aléatoire reçu du satellite. Pour ce faire, le récepteur comprend une boucle de code (ou boucle DLL pour « Delay Lock Loop » selon la terminologie anglaise) pour asservir l'oscillateur de code. La boucle de code comprend un discriminateur de code adapté pour recevoir le résultat de la corrélation, pour déterminer une erreur de code en fonction du résultat de la corrélation et pour envoyer un signal de correction de code correspondant à l'oscillateur de code.

Le récepteur de navigation par satellite reçoit le signal satellite en vue directe, et éventuellement, selon l'environnement, en vue indirecte, par exemple après réflexion sur le sol, la mer ou sur des bâtiments. Ces trajets multiples perturbent la détection du signal satellite et sont sources d'erreur de calcul du positionnement du récepteur.

Pour palier cet inconvénient, il est connu, en phase d'acquisition, de corréler le signal satellite avec une combinaison de codes locaux ponctuel, avancés et/ou retardés, de manière à obtenir une fonction de corrélation permettant de mieux discriminer le code pseudo-aléatoire reçu en vue directe.

FR 2 739 695 divulgue un corrélateur Double Delta qui sera décrit plus en détail ci-après. La fonction de corrélation théorique du corrélateur Double Delta possède une zone de capture étroite encadrée par deux zones dites de « faux accrochage », dans lesquelles le coefficient de corrélation est nul.

Le corrélateur Double Delta est efficace pour une erreur de code initiale située dans la zone de capture. Néanmoins, si l'erreur de code initiale est située dans une zone de faux accrochage, la boucle de code fonctionne en boucle ouverte, ce qui conduit à une erreur de mesure stationnaire

En outre, dans une réalisation pratique, la bande passante du récepteur n'est pas infinie, de sorte que la fonction de corrélation réelle possède des zéros secondaires dans les zones de faux accrochage, sur lesquels la boucle de code est susceptible de se verrouiller.

Pour palier cet inconvénient, FR 2 974 914 propose un récepteur comprenant un corrélateur Double Delta associé à un détecteur de faux accrochage.

Néanmoins, ceci nécessite d'adapter le récepteur pour implémenter le détecteur de faux accrochage, ce qui n'est pas forcément possible lors d'une mise à jour d'un récepteur.

DE 10 2006 001 794 A1 divulgue un procédé d'acquisition d'un signal de radionavigation par satellite combinant plusieurs corrélateurs.

L'article « Non-coherent multiple correlator delay structure and their tracking performance for Galileo signals », Danai Skournetou et Lohan Elena Simon, 1er mai 2007, XP055119272, divulgue un procédé d'acquisition d'un signal de radionavigation par satellite combinant plusieurs corrélateurs.

Un des buts de l'invention est de proposer un procédé de réception de signaux de navigation par satellite qui soit peu sensible aux faux accrochages.

A cet effet, l'invention propose un procédé d'acquisition d'un signal satellite émis par un satellite de radionavigation, selon la revendication 1. Des caractéristiques optionnelles du procédé figurent aux revendications 2 - 7.

L'invention concerne également un récepteur de radionavigation par satellite, selon la revendication 8.

L'invention et ses avantages seront mieux compris à la lecture de la description qui va suivre, donnée uniquement à titre d'exemple et faite en référence aux dessins annexés, sur lesquels :

- la figure 1 est un schéma fonctionnel d'un récepteur de navigation par satellite ;
- les figures 2 et 3 sont des schémas fonctionnels de modules de corrélation de code du récepteur de navigation par satellite ; et
- les figures 4 à 6 sont des graphiques illustrant des fonctions de corrélation.

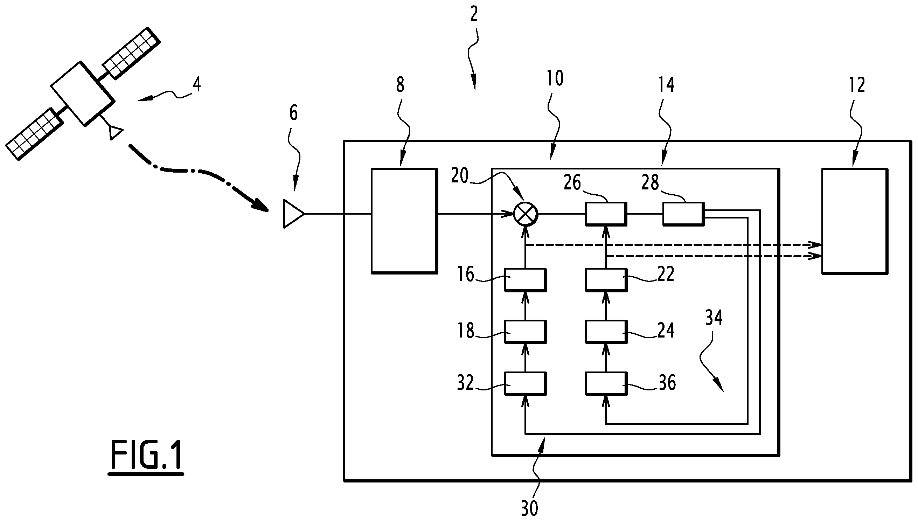

Le récepteur 2 de navigation par satellite illustré sur la figure 1 est propre à déterminer sa position géographie, sa vitesse et le temps, à partir de signaux satellite émis par des satellites d'un système de navigation par satellite et reçu par le récepteur 2.

Un satellite 4 est illustré sur la figure 1. En pratique, le système de navigation par satellite comprend une constellation de satellites. Les signaux satellite de quatre satellites différents sont nécessaires pour déterminer la position géographique.

Le récepteur 2 comprend une antenne 6, un étage de conditionnement 8, un étage de réception 10 et un étage de traitement 12.

L'étage de conditionnement 8 reçoit le signal fourni par l'antenne 6. De manière connue, l'étage de conditionnement 8 filtre le signal reçu, change la fréquence du signal reçu, amplifie le signal reçu, et numérise le signal reçu.

L'étage de réception 10 comprend des canaux de réception, chaque canal de réception étant associé à un satellite respectif et propre à détecter le signal de ce satellite. Les canaux de réception sont analogues. Un seul canal de réception 14, associé au satellite 4, est représenté sur la figure 1 et sera décrit en détail par la suite.

Le canal de réception 14 comprend un générateur de porteuse 16 pour générer une porteuse locale répliquant la porteuse du signal satellite, un oscillateur de porteuse 18 pilotant le générateur de porteuse 16 et un corrélateur de porteuse 20 pour corréler le signal reçu avec la porteuse locale.

Le canal de réception 14 comprend un générateur de code 22 pour générer des codes locaux répliquant le code pseudo-aléatoire du satellite, un oscillateur de code 24 pour piloter le générateur de code 22 et un module de corrélation de code 26 pour corréler le signal reçu avec les codes locaux.

Le générateur de code 22 est propre à générer un code local ponctuel P, des codes locaux avancés E, chaque code local avancé E étant avancé d'un délai par rapport au code local ponctuel P, et des codes locaux retardés L, chaque code local retardé L étant retardé d'un délai par rapport au code local ponctuel P.

L'oscillateur de porteuse 18 et l'oscillateur de code 24 sont des oscillateurs à commande numérique ou « NCO » pour « Numerical Contolled Oscillator » en anglais.

Le canal de réception 14 comprend un intégrateur 28 recevant les signaux corrélés et propre à délivrer des signaux intégrés correspondants.

Le canal de réception 14 possède une boucle de porteuse 30 pour asservir l'oscillateur de porteuse 18 en fonction de la sortie de l'intégrateur 28, de manière à minimiser une erreur de porteuse entre la porteuse du signal satellite et la porteuse locale.

La boucle de porteuse 30 comprend un discriminateur de porteuse 32 relié à la sortie de l'intégrateur 28 et propre à déterminer une erreur de porteuse et à envoyer à l'oscillateur de porteuse 18 un signal de correction de porteuse correspondant. Le discriminateur de porteuse 32 reçoit le signal reçu corrélé à la porteuse locale et au code local ponctuel P.

L'erreur de porteuse est une erreur de fréquence ou de phase due par exemple à la vitesse relative du satellite et du récepteur 2 qui modifie la fréquence ou la phase apparente de la porteuse du signal satellite (effet Doppler).

Le canal de réception 14 comprend une boucle de code 34 pour asservir l'oscillateur de code 24 en fonction de la sortie de l'intégrateur 28, de manière à minimiser une erreur de code entre le code pseudo-aléatoire du satellite et le code local ponctuel P.

La boucle de code 34 comprend un discriminateur de code 36 relié à la sortie de l'intégrateur 28 et adapté pour déterminer une erreur de code en fonction du résultat de la corrélation réalisée entre le signal reçu et les codes locaux, et pour envoyer un signal de correction correspondant à l'oscillateur de code 24 pour diminuer l'erreur de code.

L'erreur de code correspond à un décalage temporel entre le code local ponctuel P et le code pseudo-aléatoire du satellite. La boucle de code 34 permet de synchroniser le code local ponctuel P avec le code pseudo-aléatoire du signal satellite.

Le canal de réception 14 fournit en sortie la porteuse locale et le code local ponctuel P à l'étage de traitement 12 qui les utilise pour en extraire le signal de données du message de navigation du satellite par démodulation.

Le module de corrélation de code 26 est propre à réaliser une corrélation combinée correspondant à une combinaison linéaire d'une corrélation Double Delta et d'une corrélation étroite.

Le corrélation Double Delta et la corrélation étroite sont chacune obtenues par corrélation du signal reçu avec une combinaison arithmétique de codes locaux avancés E et retardés L.

La corrélation combinée correspond à la somme d'une corrélation étroite pondérée d'un coefficient de pondération $\alpha$ et d'une corrélation Double Delta pondérée d'un coefficient de pondération $(1 - \alpha)$. Le coefficient de pondération $\alpha$ est inférieur à 1. Les coefficients de pondération sont donc positifs et de somme égale à 1.

La combinaison linéaire est réalisée par calcul ou par partition temporelle entre la corrélation Double Delta et la corrélation étroite.

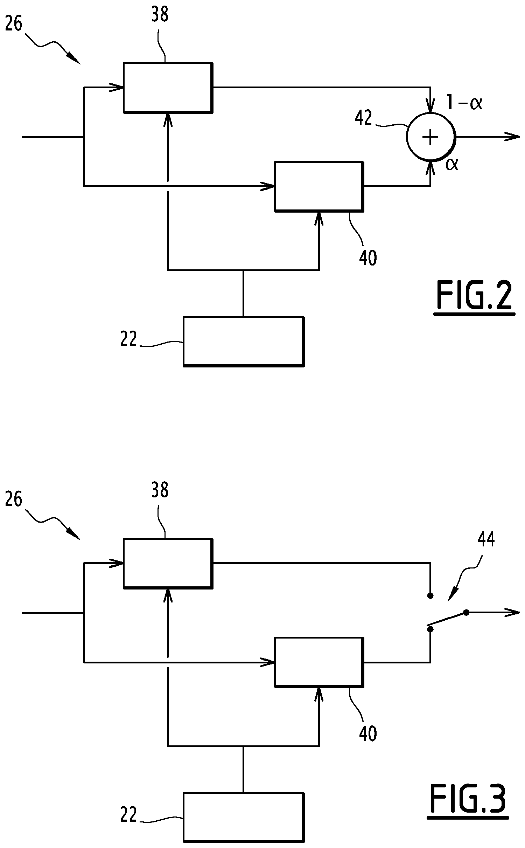

Le module de corrélation de code 26 de la figure 2 comprend un corrélateur Double Delta 38 pour réaliser une corrélation Double Delta entre le signal reçu et le code local ponctuel, un corrélateur étroit 40 pour réaliser une corrélation étroite entre le signal reçu et le code local ponctuel, et un additionneur 42 pour additionner les deux corrélations pondérées par leurs coefficients de pondération respectifs.

Le corrélateur Double Delta est désigné en anglais par l'expression « Double Delta Correlator » (DCC). Le corrélateur étroit est désigné en anglais par l'expression « Narrow Correlator » (NC).

Le corrélateur Double Delta 38 et le corrélateur étroit 40 reçoivent chacun les codes locaux avancé(s) et retardé(s) générés par le générateur de code 22 et qui leurs sont nécessaires.

La corrélation combinée est réalisée par corrélation individuelle de chaque code local avancé ou retardé avec le signal reçu puis combinaison des résultats, ou par combinaison des codes avancés et retardés puis corrélation du code combinatoire obtenu avec le signal reçu.

Le module de corrélation de code 26 de la figure 3 diffère de celui de la figure 2 en ce que la combinaison linéaire n'est pas calculée mais obtenue par partition temporelle entre la corrélation Double Delta et la corrélation étroite.

La corrélation Double Delta et la corrélation étroite sont alternées de manière cyclique temporellement, la corrélation Double Delta étant réalisée sur une première fraction d'un cycle de temps et la corrélation étroite étant réalisée sur une deuxième fraction du cycle de temps, la deuxième fraction étant complémentaire de la première fraction.

Le module de corrélation de code 26 de la figure 3 diffère de celui de la figure 2 en ce que l'additionneur est remplacé par un sélecteur 44 adapté pour sélectionner sélectivement le corrélateur Double Delta ou le corrélateur étroit de manière cyclique temporellement.

Le sélecteur 44 est piloté pour sélectionner le corrélateur Double Delta sur la première fraction du cycle de temps et pour sélectionner le corrélateur étroit sur la deuxième fraction du cycle de temps, de manière cyclique.

L'intégrateur situé en aval du multiplicateur de corrélation comprend un filtre passe-bas. Dès lors, l'intégrateur réalise une moyenne sur le cycle de temps et réalise donc la combinaison linéaire souhaitée au prorata des fractions de période de temps respectives allouées à la corrélation Double Delta et à la corrélation étroite.

Une corrélation Double Delta correspond à une corrélation du signal reçu avec une combinaison arithmétique de deux codes locaux avancés E2, E1 et de deux codes locaux retardés L1, L2 obtenus par décalage temporel du code local ponctuel P de délais -2d, -d, d et 2d, où d est un incrément de délai, et affectés respectivement des coefficients 1, -2, +2 et -1, selon la relation :

$$C_{DDC} = E2 - 2.E1 + 2.L1 - L2$$

où

E2 est un code local avancé d'un délai 2d par rapport au code local ponctuel
E1 est un code local avancé d'un délai d par rapport au code local ponctuel
L1 est un code local retardé d'un délai d par rapport au code local ponctuel ; et
L2 est un code local retardé d'un délai 2d par rapport au code local ponctuel.

L'incrément de délai d est inférieur à 1/4 chip.

Une corrélation étroite correspond à une corrélation du signal reçu avec une combinaison arithmétique d'un code local avancé E3 et d'un code local retardé L3 décalés par rapport au code local ponctuel P de délais -D et + D et affectés respectivement de coefficient -1 et +1, selon la relation :

$$C_{NC} = - E3 + L3$$

où

E3 est un code local avancé d'un délai D ; et
L3 est un code local retardé d'un délai D.

L'incrément de délai D est inférieur à 0,5 chip.

De préférence, le récepteur 2 réalise une combinaison d'une corrélation Double Delta et d'une corrélation étroite basée sur le même incrément de délai (D = d).

La corrélation étroite s'écrit alors selon la relation :

$$C_{NC} = - E1 + L1$$

La corrélation combinée obtenue par combinaison linéaire de la corrélation étroite et de la corrélation Double Delta correspond alors à une combinaison selon la relation suivante :

$$C_{EDDC} : (1-\alpha).E2 - (2+\alpha).E1 + (2-\alpha).L1 - (1-\alpha).L2$$

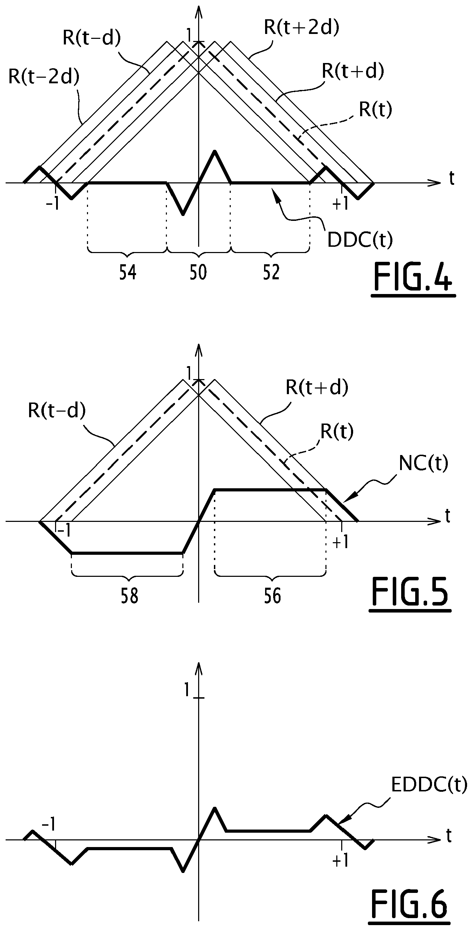

Les Figures 4 à 6 sont des graphiques illustrant des fonctions de corrélation normalisées, et représentant chacune le coefficient de corrélation (abscisse) en fonction de l'erreur de code (ordonnée) exprimée en « chip ».

La Figure 4 illustre en trait continu la fonction de corrélation DDC(t) théorique d'un corrélateur Double Delta et en pointillés la fonction d'auto-corrélation R(t) théorique du code pseudo-aléatoire.

Le code pseudo-aléatoire est conçu de sorte que sa fonction d'auto-corrélation R(t) est paire et de forme triangulaire sur l'intervalle [ - 1 ; + 1].

La fonction de corrélation normalisée de la corrélation Double Delta DCC s'exprime, selon la relation suivante :

$$DDC(t) = (R(t-2d) - 2.R(t-d) + 2.R(t+d) + R(t+2d))/R(t)$$

où

t est l'erreur de code ;
R est la fonction d'auto-corrélation du code pseudo-aléatoire ;
d est l'incrément de délai de la corrélation Double Delta.

La fonction de corrélation de la corrélation Double Delta possède une zone de capture 50 sur l'intervalle [ - 2d ; + 2d] dans lequel la fonction de corrélation est impaire. La zone de capture est encadrée par deux zones de faux accrochage 52, 54 sur les intervalles [ - 1 + 2d ; - 2d ] et [2d ; 1 - 2d], dans lesquels la fonction de corrélation est nulle.

La figure 5 illustre la fonction de corrélation d'un corrélateur étroit NC.

La fonction de corrélation normalisée de la corrélation étroite NC s'exprime, pour un incrément de délai d, selon la relation suivante :

$$NC(t) = (- R(t-d) + R(t+d))/R(t)$$

où

t est l'erreur de code ;
R est la fonction d'auto-corrélation du code pseudo-aléatoire ;
d est l'incrément de délai.

La fonction de corrélation étroite NC est impaire sur l'intervalle [- 1 - d ; 1 + d] et nulle en dehors de cette intervalle. Elle présente des plateaux 56, 58 sur les intervalles [ - 1 + d ; 1 - d] et [ d ; 1 - d].

La figure 6 illustre la fonction de corrélation normalisée théorique de la corrélation combinée EDDC obtenue par combinaison linéaire de la corrélation Double Delta DCC et de la corrélation étroite NC basées sur un incrément de temps d, selon la relation :

$$EDDC(t) = (1-\alpha).DDC(t) + \alpha.NC(t)$$

Comme cela est visible sur les figures 4 à 6, les paliers de la fonction de corrélation de la corrélation étroite coïncident avec les zones de faux accrochage de la fonction de corrélation de la corrélation Double Delta. La combinaison linéaire de la corrélation étroite avec la corrélation Double Delta permet d'élargir la zone de capture de la fonction de corrélation Double Delta en éliminant les zones de faux accrochage.

En cas d'accrochage dans la zone de capture du corrélateur Double Delta, les performances de mesure sont inchangées et l'immunité aux trajets multiples est très peu dégradée.

En cas d'accrochage dans une zone de faux accrochage du corrélateur Double Delta, le discriminateur de code continue à fournir un signal de correction d'erreur à l'oscillateur de code, qui résorbe l'erreur de code de manière lente mais certaine jusqu'à revenir dans la zone de capture du corrélateur Double Delta.

De manière générale, le choix du coefficient $\alpha$ dépend :

- de la bande passante du récepteur qui détermine les défauts de la fonction de corrélation réelle du corrélateur Double Delta, en particulier les zéros secondaires ;
- de la rapidité de réaction souhaitée en cas d'erreur de code initiale située dans une zone de faux accrochage du corrélateur Double Delta ; et
- de l'immunité aux trajets multiples souhaitée, qui diminue lorsque le coefficient $\alpha$ augmente.

Le coefficient $\alpha$ est choisi en pratique de manière à être le plus petit possible tout en éliminant les zéros secondaires des zones de faux accrochage de la fonction de corrélation réelle du corrélateur Double Delta.

De préférence, la combinaison linéaire est réalisée en combinant une fraction plus importante du corrélateur Double Delta que du corrélateur étroit. Le coefficient $\alpha$ est de préférence inférieur à 0,5.

Le procédé d'acquisition est mis en oeuvre facilement. En particulier, un récepteur conçu pour réaliser une corrélation Double Delta possède un générateur de code propre à généré les codes locaux avancé E1 et retardé L1 nécessaires à la réalisation d'une corrélation étroite basée sur le même incrément de délai. Il est donc facilement adaptable pour réaliser une combinaison linéaire d'une corrélation Double Delta et d'une corrélation étroite.

## Revendications

1. Procédé d'acquisition d'un signal satellite émis par un satellite de radionavigation (4), le signal satellite contenant un code d'identification pseudo-aléatoire cyclique propre au satellite, le procédé d'acquisition comprenant la génération d'un code local (P) répliquant le code d'identification, et la réalisation d'une corrélation combinée (EDDC) d'un signal reçu avec le code local (P), la corrélation combinée correspondant à la combinaison linéaire d'une première corrélation double delta (DDC) et d'une deuxième corrélation étroite (NC), **caractérisé en ce que** la combinaison linéaire est obtenue en alternant la première corrélation double delta (DDC) sur une première fraction d'un cycle de temps et la deuxième corrélation étroite (NC) sur une deuxième fraction du cycle de temps complémentaire de la première fraction, de manière cyclique.

2. Procédé d'acquisition selon la revendication 1, dans lequel la première corrélation double delta (DDC) est réalisée par corrélation du signal reçu avec une combinaison arithmétique de deux codes locaux avancés (E2, E1) et de deux codes retardés (L1, L2) obtenus par décalage temporel du code local (P) de délais -2d, -d, d et 2d, où d est un incrément de délai, et affectés respectivement des coefficients 1, -2, +2 et -1.

3. Procédé d'acquisition selon la revendication 2, dans lequel la deuxième corrélation étroite (NC) est basée sur la différence entre un code avancé d'un délai -D par rapport au code local (P) et un code local retardé du délai D par rapport au code local (P).

4. Procédé d'acquisition selon la revendication 3, dans lequel le délai d'incrément d de la première corrélation double delta (DDC) est égal au délai d'incrément D de la deuxième corrélation étroite (NC).

5. Procédé d'acquisition selon l'une quelconque des revendications précédentes, dans lequel la combinaison linéaire est réalisée en affectant la première corrélation double delta (DDC) et la deuxième corrélation étroite (NC) de coefficients ($1-\alpha$ ; $\alpha$) positifs de somme égale à 1.

6. Procédé d'acquisition selon l'une quelconque des revendications précédentes, comprenant la synchronisation du code local (P) avec le code d'identification de manière à minimiser une erreur de code déterminée en fonction du résultat de la corrélation combinée.

7. Procédé d'acquisition selon l'une quelconque des revendications précédentes, dans lequel le code local (P) est généré à l'aide d'un générateur de code (22) piloté par un oscillateur de code (24) asservi par une boucle de code (34) en fonction du résultat de la corrélation combinée.

8. Récepteur de radionavigation par satellite, pour recevoir un signal satellite contenant un code d'identification pseudo-aléatoire cyclique propre au satellite, le récepteur comprenant un générateur de code (22) et un module de corrélation (26) configurés pour la mise en oeuvre d'un procédé d'acquisition selon l'une quelconque des revendications précédentes.

EP 2 851 707 B1

## Patentansprüche

1. Verfahren zur Akquirierung eines Satellitensignals, welches von einem Funknavigationssatelliten (4) emittiert wird, wobei das Satellitensignal einen satellitenspezifischen, zyklischen, pseudozufälligen Identifizierungscode aufweist, wobei das Verfahren zur Akquirierung das Erzeugen eines lokalen Codes (P), welcher den Identifizierungscode nachbildet, und das Umsetzen einer kombinierten Korrelation (EDDC) eines empfangenen Signals mit dem lokalen Code (P) aufweist, wobei die kombinierte Korrelation mit der Linearkombination von einer ersten Doppel-Delta-Korrelation (DDC) und einer zweiten, engen Korrelation (NC) korrespondiert, **dadurch gekennzeichnet, dass** die Linearkombination durch Alternieren der ersten Doppel-Delta-Korrelation (DDC) über einen ersten Teil eines Zeitzyklus und der zweiten, engen Korrelation (NC) über einen zweiten Teil des Zeitzyklus, welcher komplementäre zum ersten Teil ist, auf zyklische Weise erhalten wird.

2. Verfahren zur Akquirierung gemäß dem Anspruch 1, wobei die erste Doppel-Delta-Korrelation (DDC) umgesetzt wird durch eine Korrelation des empfangenen Signals mit einer arithmetischen Kombination von zwei voreilenden lokalen Codes (E2, E1) und zwei nacheilenden Codes (L1, L2), welche durch Zeitverschiebung des lokalen Codes (P) um die Zeitspanne -2d, -d, d und 2d, wobei d ein Zeitspanneninkrement ist, erhalten werden und welche jeweilig durch Koeffizienten 1, -2, +2 und -1 beeinflusst werden.

3. Verfahren zur Akquirierung gemäß dem Anspruch 2, wobei die zweite, enge Korrelation (NC) auf der Differenz zwischen einem um eine Zeitspanne -D bezüglich des lokalen Codes (P) voreilenden Code und einem um die Zeitspanne D bezüglich des lokalen Codes (P) nacheilenden Codes basiert.

4. Verfahren zur Akquirierung gemäß dem Anspruch 3, wobei die Inkrementzeitspanne d der ersten Doppel-Delta-Korrelation (DDC) gleich der Inkrementzeitspanne D der zweiten, engen Korrelation (NC) ist.

5. Verfahren zur Akquirierung gemäß irgendeinem der vorhergehenden Ansprüche, wobei die Linearkombination umgesetzt wird durch Zuweisen positiver Koeffizienten (1-α; α) von der Summe gleich 1 zur ersten Doppel-Delta-Korrelation (DDC) und zur zweiten, engen Korrelation (NC).

6. Verfahren zur Akquirierung gemäß irgendeinem der vorhergehenden Ansprüche, aufweisend die Synchronisierung des lokalen Codes (P) mit dem Identifizierungscode, um einen in Abhängigkeit von dem Resultat der kombinierten Korrelation ermittelten Fehler des Codes zu minimieren.

7. Verfahren zur Akquirierung gemäß irgendeinem der vorhergehenden Ansprüche, wobei der lokale Code (P) erzeugt wird mittels eines Codegenerators (22), der mittels eines Codeoszillators (24), der mit einer Codeschleife in Abhängigkeit des Resultats der kombinierten Korrelation geregelt wird, gesteuert wird.

8. Satellitenfunknavigation-Empfänger zum Empfangen eines Satellitensignals, das einen satellitenspezifischen, zyklischen, pseudozufälligen Identifizierungscode aufweist, wobei der Empfänger einen Codegenerator (22) und ein Korrelationsmodul (26) aufweist, die dazu eingerichtet sind, ein Verfahren zur Akquirierung gemäß irgendeinem der der vorhergehenden Ansprüche durchzuführen.

## Claims

1. A method for acquiring a satellite signal emitted by a radio navigation satellite (4), the satellite signal containing a cyclic pseudo-random identification code specific to the satellite, the acquisition method comprising the generation of a local code (P) producing a replica of the identification code, and the production of a combined correlation (EDDC) of a received signal with the local code (P), the combined correlation corresponding to the linear combination of a first double delta correlation (DDC) and of a second narrow correlation (NC), **characterized in that** the linear combination is obtained by alternating the first double delta correlation (DDC) over a first fraction of a time cycle and the second narrow correlation (NC) over a second fraction of the time cycle complementary to the first fraction, in a cyclic manner.

2. The acquisition method according to claim 1, wherein the first double delta correlation (DDC) is produced by correlation of the received signal with an arithmetic combination of two advanced local codes (E2, E1) and of two delayed codes (L1, L2) obtained by a time shift of the local code (P) with delays of -2d, -d, d and 2d, wherein d is a delay increment, and respectively bearing the coefficient 1, -2, +2 and -1.

3. The acquisition method according to claim 2, wherein the second narrow correlation (NC) is based on the difference between an advanced code by a delay -D relatively to the local code (P) and a delayed local code by the delay D relatively to the local code (P).

4. The acquisition method according to claim 3, wherein the increment delay d of the first double delta correlation (DDC) is equal to the increment delay D of the second narrow correlation (NC).

5. The acquisition method according to any of the preceding claims, wherein the linear combination is produced by assigning to the first double delta correlation (DDC) and to the second narrow correlation (NC) positive coefficients $(1-\alpha; \alpha)$ with a sum equal to 1.

6. The acquisition method according to any of the preceding claims, comprising the synchronization of the local code (P) with the identification code so as to minimize a code error determined according to the result of the combined correlation.

7. The acquisition method according to any of the preceding claims, wherein the local code (P) is generated by means of a code generator (22) driven by a code oscillator (24) subordinated by a code loop (34) as a function of the result of the combined correlation.

8. A satellite radio navigation receiver, for receiving a satellite signal, containing a cyclic pseudo-random identification code specific to the satellite, the receiver comprising a code generator (22) and a correlation module (26) configured for implementing an acquisition method according to any of the preceding claims.

FIG.1

FIG.2

FIG.3

R(t−d)
R(t−2d)
R(t+2d)
R(t+d)
R(t)

1

−1

+1

t

DDC(t)

54  50  52

**FIG.4**

R(t−d)
R(t+d)
R(t)

1

−1

+1

t

NC(t)

58  56

**FIG.5**

1

−1

+1

t

EDDC(t)

**FIG.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2739695
- FR 2974914

- DE 102006001794 A1

**Littérature non-brevet citée dans la description**

- **DANAI SKOURNETOU ; LOHAN ELENA SIMON.** *Non-coherent multiple correlator delay structure and their tracking performance for Galileo signals,* 01 Mai 2007